# EUROPEAN PATENT APPLICATION

(11) **EP 3 696 410 A1**
(43) Date of publication of application: **19.08.2020**
(21) Application number: 18866925.3
(22) Date of filing: 09.10.2018
(51) Int. Cl.: F04B 39/00, F16J 15/44

(54) **SEAL GAS SUPPLY SYSTEM AND SEAL GAS SUPPLY METHOD**

(30) Priority: 11.10.2017 JP 2017197561
(71) Applicant: Toyo Engineering Corporation, Chiyoda-ku, Tokyo 100-6511 (JP)
(72) Inventor: WAKABAYASHI, Toshihiro, Narashino-shi Chiba 275-0024 (JP)
(74) Representative: Bianchetti Bracco Minoja S.r.l.
(86) International application number: PCT/JP2018/037518
(87) International publication number: WO 2019/073945

(57) **Abstract**

A seal gas supply system is a system for supplying seal gas to dry gas seal 4a of compressor 4 includes storage tank 1 for storing liquid having substantially the same composition as compressed gas discharged from compressor 4, pressuring device 5 for withdrawing and pressurizing the liquid stored in storage vessel 1, and vaporizing device 9 for vaporizing the liquid pressurized by pressuring device 5 to produce the seal gas.

## Description

### Technical Field

The present invention relates to a seal gas supply system and method for supplying seal gas to a dry gas seal.

### Background Art

Conventionally, dry gas seals are widely used as a non-contacting seal for sealing between a casing and a shaft in a compressor. Among them, a tandem dry gas seal is suitably used in the compressor in which not only leakage of process gas from the process cavity to the outside (i.e. the atmosphere) but also leakage of seal gas to the process cavity is unacceptable (see, for example, Patent Document 1).

The tandem dry gas seal includes a primary seal located on the process side and a secondary seal located on the atmosphere side. Generally, the primary seal is supplied with the process gas from the discharge side of the compressor, as primary seal gas, and the secondary seal is supplied with an inert gas (e.g. nitrogen) as secondary seal gas. The process gas from the process cavity is blocked from flowing into the primary seal by the primary seal gas, and the process gas used as the primary seal gas is blocked from flowing into the secondary seal by the secondary seal gas. In addition, the inert gas used as the secondary seal gas is blocked from flowing into the primary seal by the primary seal gas. Thus, the leakage of process gas to the outside (i.e. the atmosphere) is prevented, and the leakage of inert gas to the process cavity is prevented. A small amount of the primary seal gas leaks into the process cavity through a carbon ring seal or a labyrinth seal located on the process side of the primary seal. However, since the process gas supplied from the discharge side of the compressor is used as the primary seal gas, such leakage does not pose a problem.

### Citation List

### Patent Literature

Patent Literature 1: JP 2013-210099 A

### Summary of the Invention

### Technical Problem

The process gas used as the primary seal gas is typically supplied through a primary-seal-gas supply pipe connected to the discharge side of the compressor. Since the primary-seal-gas supply pipe is provided through a filter, a control valve, and the like, it causes a pressure drop. Therefore, to obtain the flow rate required to supply the primary seal gas, the differential pressure between the process cavity and the discharge side must be above a certain level. However, in the compressor having a relatively low compression ratio, the differential pressure between the process cavity and the discharge side may not be sufficient, and the flow rate required to supply the primary seal gas may not be obtained. Accordingly, it has not been possible to incorporate the tandem dry gas seal in such a compressor.

It is therefore an object of the present invention to provide a seal gas supply system and a seal gas supply method which enable a tandem dry gas seal to be incorporated even in a compressor having a relatively low compression ratio.

### Solution to Problem

To achieve the above-described object, a seal gas supply system of the present invention is a system for supplying seal gas to a dry gas seal in a compressor, and includes: a storage vessel for storing liquid having substantially the same composition as compressed gas discharged from the compressor; a pressuring device for withdrawing and pressurizing the liquid stored in the storage vessel; and a vaporizing device for vaporizing the liquid pressurized by the pressuring device to produce the seal gas.

A seal gas supply method of the present invention is a method for supplying seal gas to a dry gas seal in a compressor, and includes: preparing liquid having substantially the same composition as compressed gas discharged from the compressor; pressurizing the prepared liquid; and vaporizing the pressurized liquid to produce the seal gas.

According to the seal gas supply system and the seal gas supply method, the seal gas having substantially the same composition as the compressed gas (i.e. process gas) discharged from the compressor can be supplied to the compressor at a sufficient flow rate, regardless of the compression ratio of the compressor.

### Advantageous Effects of Invention

As described above, according to the present invention, it is possible to incorporate a tandem dry gas seal even in a compressor having a relatively low compression ratio.

### Brief Description of the Drawings

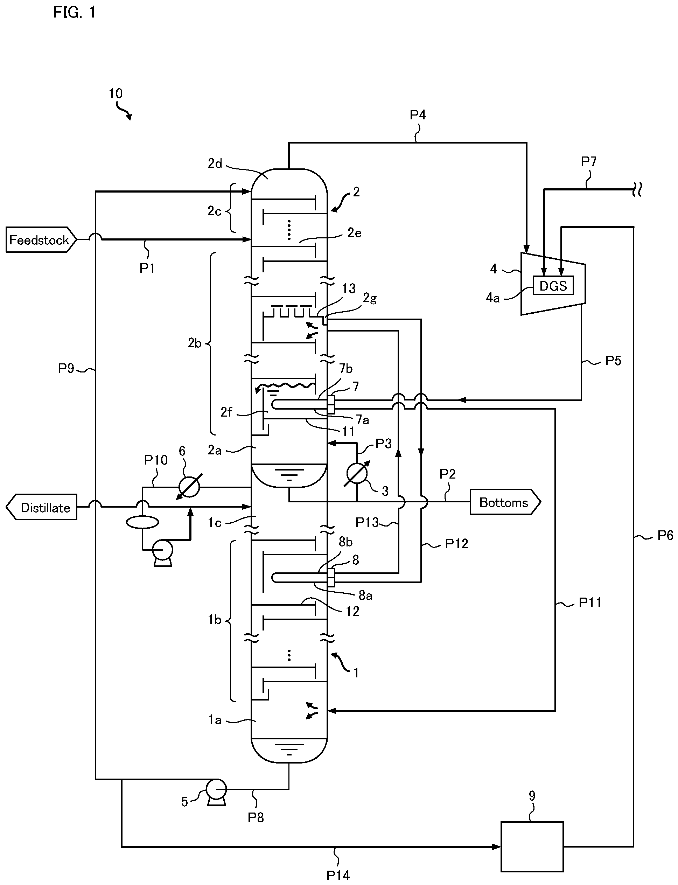

FIG. 1 is a schematic configuration diagram of a heat integrated distillation apparatus according to an embodiment of the present invention.

### Description of Embodiments

Hereinafter, an embodiment of the present invention will be described with reference to the drawings. In this specification, an embodiment in which the present invention is applied to a compressor provided in a heat integrated distillation apparatus will be described, but the present invention is not limited thereto. The term "compressor" as used herein means a machine for pumping gas by rotational motion of an impeller or a rotor, including a blower having an effective discharge pressure of 200 kPa or less.

FIG. 1 is a schematic configuration diagram of a heat integrated distillation apparatus according to an embodiment of the present invention. It should be noted that the illustrated configuration is merely an example, and for example, the number of heat transfer systems to be installed, the installation positions of heat exchangers and pipes, the feed position of feedstock, and the like can be appropriately changed in accordance with the purpose of use, the intended application, and the required performance of the apparatus.

Heat integrated distillation apparatus 10 of this embodiment includes high-pressure column 1 and low-pressure column 2 located above high-pressure column 1. High-pressure column 1 includes column bottom section 1a, trayed section 1b used as a first rectifying section, and column top section 1c. Low-pressure column 2 includes column bottom section 2a, trayed section 2b used as a stripping section, trayed section 2c used as a second rectifying section, and column top section 2d. Feedstock supply pipe P1 for supplying a feedstock is connected to low-pressure column 2 between trayed section 2b used as the stripping section and trayed section 2c used as the second rectifying section. Therefore, trayed section 2c used as the second rectifying section is positioned on feedstock feed stage 2e, to which the feedstock is fed, above trayed section 2b used as the stripping section. A packed bed section may be substituted for each of trayed section 1b of high-pressure column 1 and trayed sections 2b, 2c of the low-pressure column.

The trayed section includes multiple horizontal shelves (i.e. trays) installed in the column. A space between the adjacent trays is referred to as a stage. At each stage, vapor-liquid contact is promoted, so that mass transfer occurs. As a result, a vapor phase rich in components with higher volatility moves up to a stage above this stage, and a liquid phase rich in components with lower volatility flows down to a stage below this stage. Subsequently, at each stage, vapor-liquid contact with another liquid or vapor phase is further performed, so that mass transfer occurs. This causes an abundance of components with higher volatility at a higher stage of the column and an abundance of components with lower volatility at a lower stage of the column, which means that a distillation operation is accomplished. On the other hand, the packed bed section includes a certain packing installed in the hollow column, on the surface of which vapor-liquid contact is performed. The same mechanism as that in the trayed section causes an abundance of components with higher volatility at a higher stage of the column and an abundance of components with lower volatility at a lower stage of the column, which means that a distillation operation is accomplished.

Hereinafter, trayed section (or packed bed section) 1b of high-pressure column 1 used as the first rectifying section will also be simply referred to as a "first rectifying section". Trayed section (or packed bed section) 2b of low-pressure column 2 used as the stripping section will also be simply referred to as a "stripping section", and trayed section (or packed bed section) 2c thereof used as the second rectifying section will also be simply referred to as a "second rectifying section".

In this embodiment, second rectifying section 2c can operate under the pressure of low-pressure column 2 that is lower than that of high-pressure column 1. Therefore, the relative volatility in second rectifying section 2c becomes large, thereby reducing energy (i.e. heat amount) itself that is originally required for the separation process.

Heat integrated distillation apparatus 10 of this embodiment includes reboiler 3, compressor 4, delivery pump 5, condenser 6, and two heat exchangers 7, 8.

Reboiler 3 is provided outside column bottom section 2a of low-pressure column 2, specifically on pipe P3 that branches off from pipe P2 connected to the bottom of column bottom section 2a and that is connected to the upper space of column bottom section 2a. Reboiler 3 functions to heat a column bottom liquid of low-pressure column 2 (i.e. liquid that has flowed down stripping section 2b into column bottom section 2a). Thus, a portion of the column bottom liquid of low-pressure column 2 is heated and vaporized by reboiler 3, and then rises toward the top of low-pressure column 2. From the bottom of column bottom section 2a, a liquid bottoms product rich in components with low volatility can be obtained through pipe P2.

Compressor 4 is connected, on the suction side, through pipe P4 to second rectifying section 2c of low-pressure column 2, and is connected, on the discharge side, through pipe P5 to first heat exchanger 7 provided in low-pressure column. Compressor 4 functions to compress vapor from second rectifying section 2c and deliver the compressed and heated vapor to first heat exchanger 7.

Compressor 4 includes a tandem dry gas seal (DGS) 4a as a non-contacting seal for sealing between a casing and a shaft (both not shown) of compressor 4. DGS 4a, which is commonly used in compressors and whose detailed descriptions with reference to the drawings will be omitted, includes a primary seal located on the process side and a secondary seal located on the atmosphere side. DGS 4a is connected to primary-seal-gas supply pipe P6 for supplying primary seal gas to the primary seal and is connected to secondary-seal-gas supply pipe P7 for supplying secondary seal gas to the secondary seal. In this embodiment, the primary seal is supplied with process gas as the primary seal gas, and the secondary seal is supplied with an inert gas (e.g. nitrogen) as the secondary seal gas. A seal gas supply system for supplying the primary seal gas to DGS 4a of compressor 4 will be described in detail below.

Delivery pump 5 is connected, on the suction side, through pipe P8 to the bottom of column bottom section 1a of high-pressure column 1, and is connected, on the discharge side, through pipe P9 to second rectifying section 2c of low-pressure column. Delivery pump 5 functions to pump liquid collected in column bottom section 1a (i.e. a column bottom liquid) of high-pressure column 1 and return it to second rectifying section 2c of low-pressure column 2.

Condenser 6 is provided outside column top section 1c of high-pressure column 1, specifically on pipe P10 connected to the upper space of column top section 1c, and functions to cool vapor in column top section 1c of high-pressure column 1. Thus, the vapor that has moved to column top section 1c of high-pressure column 1, is cooled and condensed to liquid by condenser 6. A portion of the liquid is obtained as a liquid distillate product rich in components with high volatility, and the remaining portion is returned to column top section 1c as required.

First heat exchanger 7 is installed in stripping section 2b of low-pressure column 2, specifically in liquid sump unit 2f provided in stripping section 2b in the immediate vicinity of column bottom section 2a. Liquid sump unit 2f is intended to store a predetermined amount of liquid feedstock, that has been supplied from feedstock feed stage 2e and has flowed down through stripping section 2b, by collecting it on chimney tray 11, and to allow the liquid to spill from chimney tray 11 so as to fall downward. First heat exchanger 7 is a tube bundle heat exchanger, and is installed in liquid sump unit 2f such that its U-shaped tube is immersed in the liquid stored in liquid sump unit 2f. The U-shaped tube of the first exchanger 7 includes parallel tubular portions 7a, 7b arranged along chimney tray 11. Lower tubular portion 7a is connected via pipe P11 to column bottom section 1a of high-pressure column 1, and upper tubular portion 7b is connected through pipe P5 to the discharge side of compressor 4.

The operation of first heat exchanger 7 is as follows. The U-shaped tube of first heat exchanger 7 is immersed in the liquid feedstock stored in liquid sump unit 2f, that has flowed down from feedstock feed stage 2e of low-pressure column 2. Under this condition, high-temperature vapor from compressor 4 is introduced into upper tubular portion 7b of the U-shaped tube through pipe P5. The high-temperature vapor travels from upper tubular portion 7b to lower tubular portion 7a. At the same time, a portion of the liquid, that is stored in liquid sump unit 2f and in contact with the outer wall of tubular portions 7b, 7a, is heated to be vaporized and then rises. The remaining portion of the liquid that has not vaporized flows down over an outlet weir. On the other hand, a portion or all of the high-temperature vapor introduced into first heat exchanger 7 is condensed to change from a vapor phase to a liquid phase during travel from upper tubular portion 7b to lower tubular portion 7a. Then, when a fluid containing both the liquid and vapor phases is introduced into column bottom section 1a of high-pressure column 1 through pipe P11, the vapor rises and the liquid flows down.

In this manner, first heat exchanger 7 and pipes P5, P11 can apply heat to stripping section 2b of low-pressure column 2 and can also cool the fluid that is to be introduced into the lower section of high-pressure column 2. Therefore, first heat exchanger 7 constitutes a first heat transfer system (i.e. a side heat exchange unit) together with pipes P5, P11. The first heat transfer system can provide the same effects as those in a case where a side reboiler is installed in stripping section 2b of low-pressure column 2 and a side condenser is installed at a stage of the lower section (i.e. a lowermost stage) of high-pressure column 1. As a result, as compared with a distillation apparatus that does not include such a first heat transfer system, the amount of heat removed from condenser 6 in high-pressure column 1 can be reduced, and the amount of heat supplied to reboiler 3 in low-pressure column can also be reduced.

Further, to allow heat exchange between stripping section 2b of low-pressure column 2 and the lower section of high-pressure column 1, the first heat transfer system is also configured to directly introduce the high-pressure vapor from compressor 4 into first heat exchanger 7 in low-pressure column 2 and to deliver the fluid condensed in first heat exchanger 7 into high-pressure column 1. Such a configuration does not require a hydraulic head (i.e. a head difference) to transfer liquid from low-pressure column 2 to high-pressure column 1. Therefore, as compared with a distillation apparatus that requires such a hydraulic head (i.e. a head difference), energy saving performance can be improved.

Second heat exchanger 8 is located at a predetermined stage, i.e. a stage above a position where pipe P11 is connected, of first rectifying section 1b of high-pressure column 1. Second heat exchanger 8 is a tube bundle heat exchanger, and its U-shaped tube includes parallel tubular portions 8a, 8b. Parallel tubular portions 8a, 8b are arranged along chimney tray 12 that temporarily stores the condensed liquid and regulates the flow of the vapor rising from below. Lower tubular portion 8a is connected through pipe P12 to liquid withdrawal unit 2g in low-pressure column 2, and upper tubular portion 8b is connected through pipe P13 to a stage immediately below liquid withdrawal unit 2g. Liquid withdrawal unit 2g is provided at a stage above liquid sump unit 2f (i.e. first heat exchanger 7) in stripping section 2b of low-pressure column. Liquid withdrawal unit 2g is intended to store the liquid that has flowed down from above by collecting it on chimney tray 13 and to withdraw a portion of the liquid through pipe P12 to the outside of low-pressure column 2. As described above, pipe P13 penetrates the outer wall of low-pressure column 2 to be inserted into the stage immediately below liquid withdrawal unit 2g.

The operation of second heat exchanger 8 is as follows. When the fluid is introduced into column bottom section 1a of high-pressure column 1 through pipe P11, the U-shaped tube of second heat exchanger 8 is brought into contact with the vapor of the fluid that rises through first rectifying section 1b. At the same time, the liquid that has been withdrawn from liquid withdrawal unit 2g in low-pressure column is introduced into lower tubular section 8a of the U-shaped tube through pipe P12. Thus, the liquid in lower tubular portion 8a is heated by the vapor, and a portion of the vapor brought into contact with this tubular portion 8a is condensed to liquid and then flows down. Further, upper tubular portion 8b is also heated by the vapor, and therefore the liquid introduced into second heat exchanger 8 through pipe P12 changes to a fluid containing both liquid and vapor phases during travel from lower tubular portion 8a to upper tubular portion 8b. Then, when this fluid is introduced into the stage immediately below liquid withdrawal unit 2g in low-pressure column through pipe P13, the vapor rises and the liquid flows down.

In this manner, second heat exchanger 8 and pipes P12, P13 can remove heat of the vapor in high-pressure column 1 and transfer the heat to low-pressure column 2. Therefore, second heat exchanger 8 constitutes a second heat transfer system (i.e. a side heat exchange unit) together with pipes P12, P13. The second heat transfer system can provide the same effects as those in a case where a side condenser is installed in first rectifying section 1b of high-pressure column 1 and a side reboiler is installed in stripping section 2b of low-pressure column 2. As a result, as compared with a distillation apparatus that does not include such a second heat transfer system, the amount of heat removed from condenser 6 in high-pressure column 1 can be reduced, and the amount of heat supplied to reboiler 3 in low-pressure column can also be reduced.

In the above-described configuration, the fluid circulation between high-pressure column 1 and low-pressure column 2 through second heat exchanger 8 and pipes P12, P13 is provided by thermosiphon effect, and therefore a pumping means such as a pump is not required. In other words, the force of gravity causes the liquid that has been withdrawn from liquid withdrawal unit 2g in low-pressure column to move to high-pressure column 1, and the thermosiphon effect cause the fluid that has passed through second heat exchanger 8 in high-pressure column 1 to move to low-pressure column 2.

In the meantime, for supplying the process gas to DGS 4a of compressor 4 as the primary seal gas, it is conceivable that compressed gas discharged from compressor 4 is introduced directly into DGS 4a by connecting pipe P5, that is connected to the discharge side of compressor 4, and DGS 4a. However, in heat integrated distillation apparatus 10 of this embodiment, process conditions that are appropriately set may cause the selection of compressor 4 having a relatively low compression ratio, and in that case, a sufficient differential pressure may not be generated between the process cavity and the discharge side. Therefore, given that a pressure drop occurs in a pipe that connects pipe P5 and DGS 4a, a sufficient flow rate may not be obtained even when the compressed gas discharged from compressor 4 is introduced directly into DGS 4a as the primary seal gas.

For that reason, heat integrated distillation apparatus 10 of this embodiment includes vaporizing device 9 for vaporizing a portion of the liquid, that is pumped from column bottom section 1a of high-pressure column 1 to second rectifying section 2c of low-pressure column, to be used as the seal gas. In other words, vaporizing device 9 constitutes, together with first heat exchanger 7, high-pressure column 1 and delivery pump 5, a seal gas supply system for supplying the seal gas (i.e. the primary seal gas) to DGS 4a of compressor 4.

Vaporizing device 9 is connected, on the inlet side, through pipe P14 to pipe P9 that connects delivery pump 5 and second rectifying section 2c of low-pressure column 2, and is connected, on the outlet side, through primary-seal-gas supply pipe P6 to DGS 4a of compressor 4, in particular to the primary seal of DGS 4a. The structure of vaporizing device 9 is not particularly limited, and an apparatus generally used to vaporize liquid can be used as vaporizing device 9.

The operation of the seal gas supply system of this embodiment is as follows. The compressed gas discharged from compressor 4 is supplied to first heat exchanger (i.e. condensing device) 7 through pipe P5, and is partially condensed by first heat exchanger 7. The compressed gas thus condensed (i.e. the liquid produced by first heat exchanger 7) is introduced into column bottom section 1a of high-pressure column 1 through pipe P11, and is then stored therein. In other words, high-pressure column (i.e. storage vessel) 1 stores the liquid having substantially the same composition as the compressed gas discharged from compressor 4. This liquid is withdrawn and pressurized by delivery pump (i.e. pressuring device) 5. The pressurized liquid is mostly returned to second rectifying section 2c of low-pressure column 2 through pipe P9, and is partially supplied to vaporizing device 9 through pipe P14. Vaporizing device 9 vaporizes the liquid pressurized by delivery pump 5 to produce the seal gas (i.e. the primary seal gas). The primary seal gas thus produced is supplied to DGS 4a of compressor 4 through primary-seal-gas supply pipe P6.

In this case, the supply pressure of the primary seal gas supplied to compressor 4 depends on the discharge pressure of delivery pump 5. The discharge pressure is a pressure which allows the supply pressure of the seal gas to be increased to such an extent that a sufficient flow rate can be obtained even though a pressure drop occurs in primary-seal-gas supply pipe P6. Therefore, according to the seal gas supply system of this embodiment, regardless of the compression ratio of compressor 4, the primary seal gas having substantially the same composition as the compressed gas discharged from compressor 4 (i.e. the process gas) can be supplied to compressor 4 at a sufficient flow rate. As a result, it is possible to incorporate a tandem dry gas seal even in compressor 4 having a relatively low compression ratio.

Although the above-described embodiment illustrates the case where the seal gas supply system of the present invention is incorporated in a heat integrated distillation apparatus, the present invention is not limited thereto. For example, the seal gas supply system of the present invention may be incorporated in other apparatuses including a compressor, or may be configured as a separate system. In such cases, if liquid having substantially the same composition as compressed gas discharged from the compressor can be separately prepared, the compressed gas discharged from the compressor does not necessarily need to be condensed. In other words, the seal gas supply system of the present invention need not include a condensing device such as a heat exchanger, as long as it includes at least a storage vessel for storing the liquid having substantially the same composition as the compressed gas discharged from the compressor, a pressuring device for withdrawing and pressurizing the liquid stored in the storage vessel, and a vaporizing device for vaporizing the liquid pressurized by the pressuring device to produce the seal gas. The term "substantially the same composition" as used herein means that components of the gases are of the same type, and means that the ratios of the components may be different.

### Reference Signs List

- 1: High-pressure column
- 1a: Column bottom section
- 1b: First rectifying section (trayed section or packed bed section)
- 1c: Column top section
- 2: Low-pressure column
- 2a: Column bottom section
- 2b: Stripping section (trayed section or packed bed section)
- 2c: Second rectifying section (trayed section or packed bed section)
- 2d: Column top section
- 2e: Feedstock feed stage
- 2f: Liquid sump unit
- 2g: Liquid withdrawal unit
- 3: Reboiler
- 4: Compressor
- 4a: Dry gas seal (DGS)
- 5: Delivery pump
- 6: Condenser
- 7: First heat exchanger
- 7a: Lower tubular portion
- 7b: Upper tubular portion
- 8: Second heat exchanger
- 8a: Lower tubular portion
- 8b: Upper tubular portion
- 9: Vaporizing device
- 10: Heat integrated distillation apparatus
- 11-13: Chimney trays
- P1-P14: Pipes

## Claims

1. A seal gas supply system for supplying seal gas to a dry gas seal in a compressor, the system comprising:
a storage vessel for storing liquid having substantially the same composition as compressed gas discharged from the compressor;
a pressuring device for withdrawing and pressurizing the liquid stored in the storage vessel; and
a vaporizing device for vaporizing the liquid pressurized by the pressuring device to produce the seal gas.

2. The seal gas supply system according to claim 1, comprising a condensing device for condensing the compressed gas discharged from the compressor to produce the liquid.

3. A heat integrated distillation apparatus comprising a seal gas supply system according to claim 2.

4. The heat integrated distillation apparatus according to claim 3, comprising:
a high-pressure column including a trayed section or a packed bed section that is used as a first rectifying section;
a low-pressure column located above the high-pressure column, the low-pressure column including a trayed section or a packed bed section that is used as a stripping section and a trayed section or a packed bed section that is positioned on a feedstock feed stage, to which a feedstock is fed, above the stripping section and that is used as a second rectifying section;
a delivery pump for delivering liquid collected in a column bottom section of the high-pressure column to the second rectifying section;
the compressor for compressing vapor from the second rectifying section;
a heat exchanger installed in the stripping section of the low-pressure column for condensing a portion or all of the compressed gas discharged from the compressor and delivering the condensed gas to the column bottom section of the high-pressure column; and
the vaporizing device for vaporizing a portion of the liquid pumped by the delivery pump to produce the seal gas,
wherein the high-pressure column serves as the storage vessel of the seal gas supply system, the delivery pump serves as the pressuring device of the seal gas supply system, and the heat exchanger serves as the condensing device of the seal gas supply system.

5. A seal gas supply method for supplying seal gas to a dry gas seal in a compressor, the method comprising:
preparing liquid having substantially the same composition as compressed gas discharged from the compressor;
pressurizing the prepared liquid; and
vaporizing the pressurized liquid to produce the seal gas.

6. The seal gas supply method according to claim 5, wherein the preparing of the liquid includes condensing the compressed gas discharged from the compressor to produce the liquid.
